# EUROPEAN PATENT SPECIFICATION

(11) **EP 2 758 265 B1**
(45) Date of publication and mention of the grant of the patent: **06.04.2016**
(21) Application number: 11764475.7
(22) Date of filing: 23.09.2011
(51) Int. Cl.: B60K 17/356, B60W 30/19, B60W 10/30, F16H 61/04, F16H 61/472, B60W 10/06

(54) **A DRIVETRAIN OF A VEHICLE AND A METHOD TO CONTROL THE SAME**
ANTRIEBSSTRANG EINES FAHRZEUGS UND STEUERVERFAHREN DAFÜR
TRAIN DE TRANSMISSION D'UN VÉHICULE ET PROCÉDÉ DE COMMANDE DE CELUI-CI

(43) Date of publication of application: 30.07.2014
(73) Proprietor: Volvo Lastvagnar AB, 405 08 Göteborg (SE)
(72) Inventor: ÖBERG, Jan, S-417 29 Göteborg (SE); ALM, Filip, S-445 36 Bohus (SE); LARSSON, Lena, S-426 74 Västra Frölunda (SE)
(74) Representative: Jönrup, Emil
(86) International application number: PCT/EP2011/004768
(87) International publication number: WO 2013/041115

(56) References cited:
- EP-A2- 0 402 863
- EP-A2- 1 466 772
- DE-A1- 10 126 348
- DE-A1-102005 042 352
- DE-A1-102007 011 791
- FR-A1- 2 907 409
- GB-A- 1 381 477

## Description

### TECHNICAL FIELD

The present invention relates to a method to control a drivetrain comprising a hydraulic transmission with a hydraulic pump. The invention further relates to a drivetrain of a vehicle, wherein said drivetrain comprises a hydraulic transmission with a hydraulic pump, which is directly driven by a combustion engine of the drivetrain.

### BACKGROUND ART

The document DE 101 26 348 discloses a method to control a drivetrain of a vehicle, wherein said drivetrain at least comprises a combustion engine, a conventional transmission, a main clutch, a hydraulic transmission system, a first axle with a first wheel pair and a second axle with a second wheel pair, wherein
said hydraulic transmission system at least comprises a pump, and said first wheel pair is driven by said combustion engine over said conventional transmission and
said second wheel pair (5) is driven over said hydraulic transmission system.

In a drivetrain, of a vehicle, with a conventional transmission, a main clutch in the drivetrain is open during a gear change, wherein the engine is in idle during the time of the gear change and no torque from the engine is transmitted to the driving wheels. The engine speed is thereby reduced and the pressure in the turbo (exhaust gas turbine for supercharging intake air provided to the engine) decreased. When the new gear is selected and the main clutch closed (engaged), the engine has to build up the turbo pressure before a maximum torque can be transmitted to the driving wheels from the engine. In critical situations (e.g. start of the vehicle in a steep slope and/or heavy loaded vehicle), the time it takes to build up the turbo pressure and the engine torque can be too long, wherein the vehicle speed has decreased so much that the new gear is "missed", i. e. the selected new gear is too high.

Many vehicles today are equipped with a power shift transmission. In a power shift transmission the engine speed, turbo pressure and the traction can be maintained during a gear change, which obviously is of advantage. However, the price for this is higher losses and thereby higher costs. A power shift transmission is additionally more expensive and complex than a conventional transmission.

Hence, there is a need for an improved drivetrain and method to control the same, which avoids the above mentioned problems.

### SUMMARY

The first object of the present invention is to provide an inventive method to in an energy efficient manner control a drivetrain, such the engine torque and the turbo pressure is maintained during shifting. A second object of the invention is to provide a drivetrain suitable for said inventive method. These objects are achieved by the subject matter defined in independent claim 1 and 9.

The present invention thereby considers a method to a drivetrain of a vehicle. Wherein said drivetrain at least comprises a combustion engine, a conventional transmission, a main clutch, and a hydraulic transmission system, a first axle with a first wheel pair and a second axle with a second wheel pair.

The hydraulic transmission system at least comprises a pump. Said first wheel pair is driven by said combustion engine over said conventional transmission. Said second wheel pair is driven by said combustion engine over said hydraulic transmission system. The pump of the hydraulic transmission system is driven directly by said combustion engine.

The inventive method is adapted to be performed during driving of a vehicle and is executed when a gear change is initialised in said conventional transmission. As a response to the initiation of the gear change, said pump is controlled, such that load torque from said pump on the combustion engine is increased, wherein said load torque increase on the combustion engine caused by the pump at least partially replaces a load torque decrease caused by said gear change.

Due to the inventive method a load torque will be acting upon the combustion engine also during a gear change in the conventional transmission. Thereby can the turbo pressure be at least partially maintained at a higher level and a faster torque build up in the combustion engine can be achieved after a gearshift. The vehicle will thereby have a better drivability, due to a fast response after a gear change.

The load torque on the combustion engine from the pump is preferably increased, such that a turbo pressure in said combustion engine is at least kept above a first threshold value, wherein by selecting a suitable threshold value, time it takes for torque build up in the combustion engine can be minimised for any given situation. A preferred threshold value is that the turbo pressure is maintained at the same level as before the gear shift has been initialised.

It is preferred that a change of said load torque increase from said pump and said load torque decrease on the combustion engine from said first wheel pair corresponds to each other, such that the gradient of the load torque increase and decrease correspond to each other. A smooth transition between the total load torque on the combustion engine before the gear change has been initiated and the total load torque on the combustion engine during the gear change is thereby achieved. This increases the comfort and safety of the vehicle.

It is further advantageous that said load torque increase from said pump replaces the whole load torque from said first wheel pair during said gear change. The torque load on the combustion engine is thereby held constant during the gear change.

The load torque of the pump is controlled dependent of at least one of the position of an accelerator pedal, the position of a brake pedal or an automatic cruise control system. The load torque can thereby be adapted when the driving conditions are changing.

Method according to any of the preceding claims, wherein power consumed by the pump is used to create traction on the second wheel pair. The second wheel pair can thereby drive the vehicle during the gear change, whereby a gear change can be performed without or at least with a limited loss in traction. A vehicle having traction during the whole gear shift will have an improved driveability. The traction is achieved without an energy consuming torque converter.

It is preferred that the pump is controlled such that the total traction force on the first and the second wheel pair is constant during a gear change, given that an input from an accelerator pedal and/or a brake pedal and/or a cruise control system is constant during said gear change.

It is further preferred that the pump is controlled such that the total traction force on the second wheel pair is increased during a gear change when an input from an accelerator pedal and/or a brake pedal and/or a cruise control system is indicating an increased speed of the vehicle. Thereby is a driver or a control system able to increase the speed of the vehicle even during a gear change, wherein the driveability is increased.

It is further preferred that the pump is controlled such that the total traction force on the second wheel pair is decreased during a gear change when an input from an accelerator pedal and/or a brake pedal and/or a cruise control system is indicating a decreased speed of the vehicle.

In the inventive method it is preferred that the power consumed by the hydraulic pump is used to create traction on the second wheel pair. A vehicle with the inventive drivetrain can thereby be adapted such that when the engine input (either directly from the driver or from a cruise control) indicates that an increased torque is needed, the increased torque is delivered through the hydraulic pump and the second wheel pair until the gear change has been performed. This improves the driveability in heavy terrain and on soft ground, because the vehicle loses less speed or even increases its speed during the gear change. In the same manner, if a braking operation occurs during a gear change, the load torque on the engine should be decreased, wherein the traction from the second wheel pair also is decreasing, this is important for safety reasons, such that the vehicle reduces its speed directly upon a drivers or cruise controls command.

The inventive method enables that the vehicle responses to the demands of the driver and/or a cruise control even during a gear change.

Method according to any of the preceding claims, wherein said torque increase can be either positive or negative. The method can thereby be used both when the vehicle is driven by the combustion engine and when it is in an engine braking mode.

### BRIEF DESCRIPTION OF THE DRAWINGS

The present invention will now be described in detail with reference to the figures, wherein:
- Figure 1: shows a schematic drivetrain according to the invention.
- Figure 2: shows a diagram of a step-up gear change (up shift) during acceleration with a constant load torque on the engine, with a method according to the invention.
- Figure 3: shows a diagram of a down-step gear change (down shift) during retardation, with a constant load torque on the driving wheels.

### DETAILED DESCRIPTION

In the following only one embodiment of the invention is shown and described, simply by way of illustration of one mode of carrying out the invention. Three situations are exemplified, wherein the invention not is limited to the specific diagrams presented, but include all variations within the scope of the present claims.

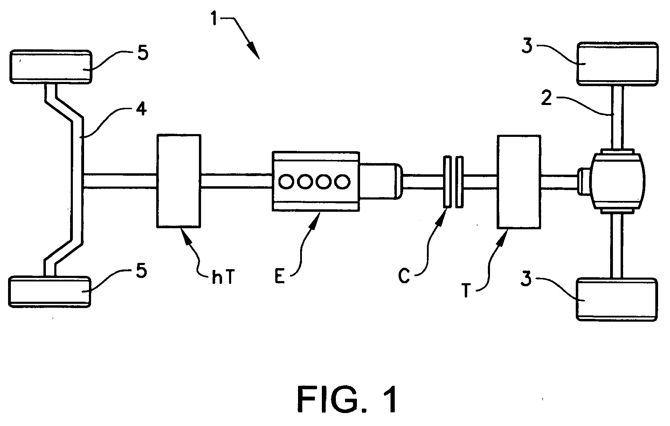

In figure 1 a schematic view of a drivetrain 1 according to the invention is disclosed. The drivetrain 1 comprises a diesel engine E (engine E), a main clutch C, a conventional transmission T, a first axle 2 with a first wheel pair 3, a hydraulic transmission hT, a second axle 4 with a second wheel pair 5. The hydraulic transmission hT comprises a hydraulic pump P (pump P), which is driven by the engine E.

The conventional transmission T is connected to the engine E through the main clutch C, wherein the engine E can drive the first wheel pair 3 when the main clutch C is closed and a gear is chosen in the conventional transmission. The second wheel pair 5 can be driven by the engine E through the hydraulic transmission hT.

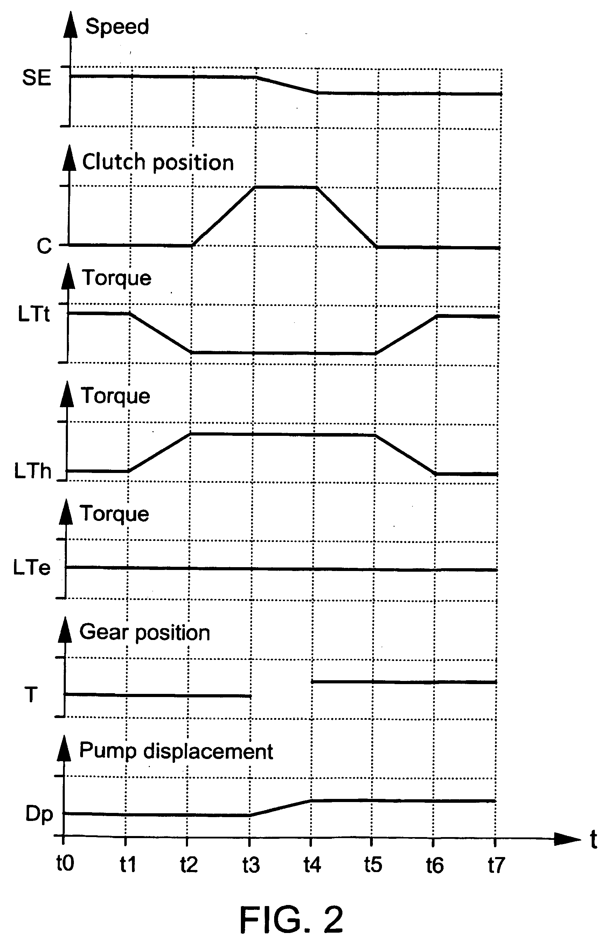

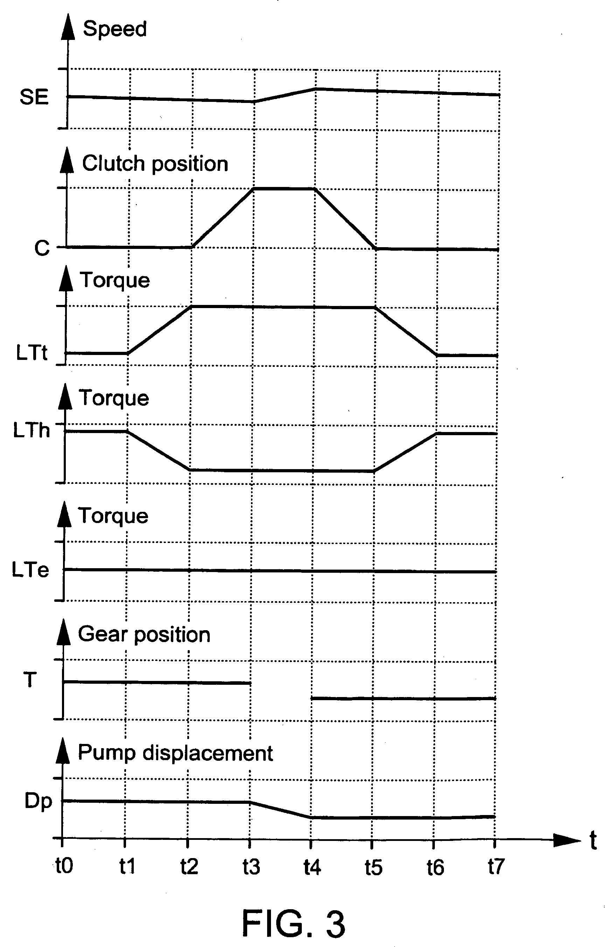

The figures 2 and 3 show a characteristic diagrams during a gear change of a vehicle provided with a drivetrain 1 as shown in figure 1. The diagrams visualising a relationship and timing between speed of the engine SE, opening and closing of the clutch C, load torque LTt on the engine E from the conventional transmission T, load torque LTh on the engine E from the pump P, the total load torque LTe on the engine E, the status of the conventional transmission T and the displacement Dp of the pump P during a time period t1 - t7, during which a gear change takes place.

All three examples in the figures 2-4 are simplifications of the reality and it is assumed that the external influences are constant during the time period of the gear change. The ideal use of the method is to keep the load torque LTe on the engine constant over a time period needed for a gear change. However, such a use of the method is normally just available in lower speeds, due to the dimensions of the hydraulic pump P. At higher speeds it is just possible to cover a part of the load torque loss on the engine due to the gear change, with the added load torque from the pump P. The hydraulic transmission hT is in all the examples connected to the second wheel pair 5, such that the energy consumed by the pump P is used as driving torque at the second wheel pair 5. It should be noted, that the diagrams are schematic.

During the time between t2 and t5, the vehicle is driven only through the hydraulic transmission. In the time interval t0-t1 the vehicle is driven only through the conventional transmission, just as during the time interval t6 - t7, i.e. before the gear change is initialised and when the gear change is executed. In the time intervals t1 - t2 and t5 - t6, the total load torque LTe on the engine E comes from both the hydraulic transmission hT and the conventional transmission T. This is valid for all the examples in figure 2 - 4, which will be described in further below.

Now in figure 2 a diagram for a step-up gear change (up shift) of a vehicle under acceleration and constant torque load on the engine E is shown. At the time t1 the step-up gear change is initialised. As a first measure, between the time t1 and t2, the load torque LTh from the pump P of the hydraulic transmission hT on the engine E is increased, whereby the load torque LTt from the conventional transmission T on the engine E is decreased as a consequence thereby, both these actions are done synchronously, such that the total load torque LTe on the engine E is kept constant. At the time t2, the load torque LTh of the pump P is the only load torque LTe on the engine E, and the conventional transmission T contributes thereby not to the load torque LTe on the engine E.

The clutch C can thereby start to open in the time interval between t2 and t3, wherein when the clutch C is fully open at the time t3. The step-up gear change can thereby be performed in the time interval between t3 and t4, during which time interval the clutch C remains fully open. Further, during the time interval t3 - t4, the engine speed is adjusted to the new gear, i.e. decreased, wherein the displacement Ph of the pump HL is increased, in order to maintain the same load torque LTe on the engine E.

At the time t4, when the step-up gear change is performed in the conventional transmission, the clutch C starts to close (engage). The clutch C is fully closed at the time t5. After the clutch C is fully closed, the load torque LTh from the pump P is controlled to decrease, wherein the load torque LTt on the engine E from the conventional transmission T is increasing again. At the time t6 the conventional transmission T has taken over the whole load torque LTe on the engine E again, wherein the gear change has been concluded and the vehicle is driven by the engine E over the conventional transmission T with the new gear engaged.

Now in the diagram shown in figure 3 a step-down gear change (down shift) for a vehicle under retardation, with an engine brake, and a constant total negative torque acting on the engine E is disclosed. The load torque LTe on the engine E is a negative torque. The gear change is initialised at the time t1. As a first measure, between the time t1 and t2, the load torque LTh from the pump P of the hydraulic transmission hT on the engine E is increased, whereby the load torque LTt from the conventional transmission T on the engine E is decreased as a consequence thereby, both these actions are done synchronously, such that the total load torque LTe on the engine E is kept constant. Hence, the engine brake acts thereafter over the second wheel pair 5 instead over the first wheel pair 3. At the time t2, the load torque LTh of the pump P is the only load torque LTe on the engine E, and the conventional transmission T contributes thereby not to the load torque LTe on the engine E.

The clutch C can thereby start to open in the time interval between t2 and t3, wherein the clutch C becomes fully open at the time t3. The step-down gear change can thereby be performed in the time interval between t3 and t4, during which time interval the clutch C remains fully open. Further, during the time interval t3 - t4, the engine speed is adjusted to the new gear, i.e. increased, wherein the displacement Dp of the pump P is decreased, in order to maintain the same load torque LTe on the engine E, and thereby the same braking force upon the vehicle.

At the time t4, when the step-down gear change has been performed in the conventional transmission, the clutch C starts to close. The clutch C is fully closed at the time t5. After the clutch C is fully closed, the load torque LTh from the pump P is controlled to decrease, wherein the load torque LTt on the engine from the conventional transmission T is increasing again. At the time t6 the conventional transmission T has taken over the whole load torque LTe on the engine E again, wherein the gear change has been concluded and the engine brake is fully performed over the first wheel pair 3 and the conventional transmission T in the new gear.

The three examples above are all set under ideal conditions, which are simplified. However, the same principles apply in reality in more varying conditions.

Reference signs mentioned in the claims should not be seen as limiting the extent of the matter protected by the claims, and their sole function is to make claims easier to understand.

As will be realised, the invention is capable of modification in various obvious respects, all without departing from the scope of the appended claims. Accordingly, the drawings and the description thereto are to be regarded as illustrative in nature, and not restrictive.

## Claims

1. Method to control a drivetrain (1) of a vehicle, wherein said drivetrain (1) at least comprises a combustion engine (E), a conventional transmission (T), a main clutch (C), a hydraulic transmission system (hT), a first axle (2) with a first wheel pair (3) and a second axle (4) with a second wheel pair (5), wherein
said hydraulic transmission system (hT) at least comprises a pump, and
said first wheel pair (3) is driven by said combustion engine (E) over said conventional transmission (T), and
said second wheel pair (5) is driven by said combustion engine (E) over said hydraulic transmission system (hT), wherein said pump of the hydraulic transmission system (hT) is driven directly by said combustion engine (T), said method is performed during driving of said vehicle, wherein
• a gear change is initialised in said conventional transmission (T), whereby
• said pump is controlled, such that load torque (LTh) from said pump on the combustion engine (E) is increased, wherein
said load torque (LTh) increase on the combustion engine (E) caused by the pump at least partially replaces a load torque (LTt) decrease caused by said gear change.

2. Method according to claim 1, wherein the load torque (LTh) on the combustion engine (E) from the pump is increased, such that a turbo pressure in said combustion engine (E) is at least kept above a first threshold value.

3. Method according to claim 1 or 2, wherein a change of said load torque (LTh) increase on the combustion engine (E) from said pump is performed such that it corresponds to a change of said decrease of the load torque (LTt) on the combustion engine (E) from said first wheel pair (3) over the time interval.

4. Method according to any of the preceding claims, wherein said load torque (LTh) increase from said pump replaces the whole load torque (LTt) from said first wheel pair (3) during said gear change.

5. Method according to any of the preceding claims, wherein the load torque (LTh) of the pump is controlled by at least one of:
• the position of an accelerator pedal,
• the position of a brake pedal, or
• an automatic cruise control system.

6. Method according to any of the preceding claims, wherein said load torque (LTh) increase can be either positive or negative.

7. Method according to claim 6, wherein power consumed by the pump is used to create traction force on the second wheel pair (5).

8. Method according to claim 7, wherein the pump is controlled such that the total traction force on the first and the second wheel pair (3, 5) is constant during a gear change, given that an input from an accelerator pedal and/or a brake pedal and/or a cruise control system is constant during said gear change.

9. Method according to claim 7 or 8, wherein the pump is controlled such that the total traction force on the second wheel pair is increased during a gear change when an input from an accelerator pedal and/or a brake pedal and/or a cruise control system is indicating an increased speed of the vehicle.

10. Method according to claim 7, 8 or 9, wherein the pump is controlled such that the total traction force on the second wheel pair is decreased during a gear change when an input from an accelerator pedal and/or a brake pedal and/or a cruise control system is indicating a decreased speed of the vehicle.

11. Drivetrain (1) of a vehicle, wherein said drivetrain (1) at least comprises a combustion engine (E) a conventional transmission (T), a main clutch (C), a hydraulic transmission system (hT9 provided with at least one pump, and a first wheel pair (3) on a first axle (2) and a second wheel pair (5) on a second axle (4), **characterised in that**, said drivetrain (1) is controlled according to the method of any of the claims 1-10.

12. Vehicle provided with a drivetrain (1) according to claim 11.

## Patentansprüche

1. Verfahren zur Steuerung eines Antriebsstranges (1) eines Fahrzeugs, wobei der Antriebsstrang (1) wenigstens einen Verbrennungsmotor (E), ein herkömmliches Getriebe (T), eine Hauptkupplung (C), ein hydraulisches Getriebesystem (hT), eine erste Achse (2) mit einem ersten Radpaar (3) und eine zweite Achse (4) mit einem zweiten Radpaar (5) umfasst, wobei
- das hydraulische Getriebesystem (hT) wenigstens eine Pumpe umfasst und das erste Radpaar (3) durch den Verbrennungsmotor (E) über das herkömmliche Getriebe (T) angetrieben wird, und
- das zweite Radpaar (5) durch den Verbrennungsmotor (E) über das hydraulische Getriebesystem (hT) angetrieben wird, wobei die Pumpe des hydraulischen Getriebesystems (hT) direkt durch den Verbrennungsmotor (T) angetrieben wird,
- wobei das Verfahren während des Fahrens des Fahrzeugs durchgeführt wird, wobei
• ein Gangwechsel in dem herkömmlichen Getriebe (T) initialisiert wird, wobei
• die Pumpe so gesteuert wird, dass ein Lastmoment (LTh) von der Pumpe an dem Verbrennungsmotor (E) erhöht wird, wobei
- die Erhöhung des Lastmoments (LTh) an dem Verbrennungsmotor (E), die durch die Pumpe verursacht wird, wenigstens teilweise eine Verringerung eines Lastmoments (LTt) ersetzt, die durch den Gangwechsel verursacht wird.

2. Verfahren nach Anspruch 1, wobei das Lastmoment (LTh) an dem Verbrennungsmotor (E) von der Pumpe so erhöht wird, dass ein Turbodruck in dem Verbrennungsmotor (E) wenigstens oberhalb eines ersten Schwellwerts gehalten wird.

3. Verfahren nach Anspruch 1 oder 2, wobei eine Veränderung einer Erhöhung des Lastmoments (LTh) an dem Verbrennungsmotor (E) von der Pumpe so durchgeführt wird, dass sie einer Veränderung der Verringerung des Lastmoments (LTt) an dem Verbrennungsmotor (E) von dem ersten Radpaar (3) über das Zeitintervall entspricht.

4. Verfahren nach irgendeinem der vorhergehenden Ansprüche, wobei die Erhöhung des Lastmoments (LTh) von der Pumpe das gesamte Lastmoment (LTt) von dem ersten Radpaar (3) während des Gangswechsels ersetzt.

5. Verfahren nach irgendeinem der vorhergehenden Ansprüche, wobei das Lastmoment (LTh) der Pumpe durch wenigstens eines gesteuert wird von:
• der Position eines Gaspedals,
• der Position eines Bremspedals, oder
• einem Tempomatsystem.

6. Verfahren nach irgendeinem der vorhergehenden Ansprüche, wobei die Erhöhung des Lastmoments (LTh) entweder positiv oder negativ sein kann.

7. Verfahren nach Anspruch 6, wobei die durch die Pumpe verbrauchte Leistung zur Erzeugung einer Traktionskraft an dem zweiten Radpaar (5) verwendet wird.

8. Verfahren nach Anspruch 7, wobei die Pumpe so gesteuert wird, dass die Gesamttraktionskraft an dem ersten und dem zweiten Radpaar (3, 5) während eines Gangwechsels konstant ist, vorausgesetzt, dass ein Eingang von einem Gaspedal und/oder einem Bremspedal und/oder einem Tempomatsystem während des Gangwechsels konstant ist.

9. Verfahren nach Anspruch 7 oder 8, wobei die Pumpe so gesteuert wird, dass die Gesamttraktionskraft an dem zweiten Radpaar während eines Gangwechsels erhöht wird, wenn ein Eingang von einem Gaspedal und/oder einem Bremspedal und/oder einem Tempomatsystem eine erhöhte Geschwindigkeit des Fahrzeugs anzeigt.

10. Verfahren nach Anspruch 7, 8 oder 9, wobei die Pumpe so gesteuert wird, dass die Gesamttraktionskraft an dem zweiten Radpaar während eines Gangwechsels verringert wird, wenn ein Eingang von einem Gaspedal und/oder einem Bremspedal und/oder einem Tempomatsystem eine verringerte Geschwindigkeit des Fahrzeugs anzeigt.

11. Antriebsstrang (1) eines Fahrzeugs, wobei der Antriebsstrang (1) wenigstens einen Verbrennungsmotor (E), ein herkömmliches Getriebe (T), eine Hauptkupplung (C), ein Hydraulikgetriebesystem (hT), das mit wenigstens einer Pumpe versehen ist und ein erstes Radpaar (3) auf einer ersten Achse (2) und ein zweites Radpaar (5) auf einer zweiten Achse (4) umfasst, **dadurch gekennzeichnet, dass** der Antriebsstrang (1) gemäß dem Verfahren nach irgendeinem der Ansprüche 1-10 gesteuert wird.

12. Fahrzeug versehen mit einem Antriebsstrang (1) nach Anspruch 11.

## Revendications

1. Procédé pour commander une chaîne cinématique (1) d'un véhicule, dans lequel ladite chaîne cinématique (1) comprend au moins un moteur à combustion (E), une transmission classique (T), un embrayage principal (C), un système de transmission hydraulique (hT), un premier essieu (2) avec une première paire de roues (3) et un deuxième essieu (4) avec une deuxième paire de roues (5), dans lequel
ledit système de transmission hydraulique (hT) comprend au moins une pompe, et
ladite première paire de roues (3) est entraînée par ledit moteur à combustion (E) sur ladite transmission classique (T), et
ladite deuxième paire de roues (5) est entraînée par ledit moteur à combustion (E) sur ledit système de transmission hydraulique (hT), où ladite pompe du système de transmission hydraulique (hT) est entraînée directement par ledit moteur à combustion (T),
ledit procédé est effectué pendant la conduite dudit véhicule, dans lequel
• un changement de vitesse est initialisé dans ladite transmission classique (T), moyennant quoi
• ladite pompe est commandée, de sorte qu'un couple de charge (LTh) de ladite pompe sur le moteur à combustion (E) soit augmenté, où
ladite augmentation du couple de charge (LTh) sur le moteur à combustion (E) provoquée par la pompe remplace au moins partiellement une diminution du couple de charge (LTt) provoquée par ledit changement de vitesse.

2. Procédé selon la revendication 1, dans lequel le couple de charge (LTh) sur le moteur à combustion (E) de la pompe est augmenté, de sorte qu'une pression de turbocompresseur dans ledit moteur à combustion (E) soit au moins maintenue au-dessus d'une première valeur seuil.

3. Procédé selon la revendication 1 ou 2, dans lequel un changement de ladite augmentation du couple de charge (LTh) sur le moteur à combustion (E) de ladite pompe est effectué de sorte qu'il corresponde à un changement de ladite diminution du couple de charge (LTt) sur le moteur à combustion (E) de ladite première paire de roues (3) sur l'intervalle de temps.

4. Procédé selon l'une des revendications précédentes, dans lequel ladite augmentation du couple de charge (LTh) de ladite pompe remplace le couple de charge (LTt) total de ladite première paire de roues (3) pendant ledit changement de vitesse.

5. Procédé selon l'une des revendications précédentes, dans lequel le couple de charge (LTh) de la pompe est commandé par au moins l'un parmi :
• la position d'une pédale d'accélérateur,
• la position d'une pédale de frein, ou
• un système de régulation de vitesse automatique.

6. Procédé selon l'une des revendications précédentes, dans lequel ladite augmentation du couple de charge (LTh) peut être positive ou négative.

7. Procédé selon la revendication 6, dans lequel la puissance consommée par la pompe est utilisée pour créer une force de traction sur la deuxième paire de roues (5).

8. Procédé selon la revendication 7, dans lequel la pompe est commandée de sorte que la force de traction totale sur les première et deuxième paires de roues (3, 5) soit constante pendant un changement de vitesse, étant donné qu'une entrée à partir d'une pédale d'accélérateur et/ou d'une pédale de frein et/ou d'un système de régulation de vitesse est constante pendant ledit changement de vitesse.

9. Procédé selon la revendication 7 ou 8, dans lequel la pompe est commandée de sorte que la force de traction totale sur la deuxième paire de roues soit augmentée pendant un changement de vitesse lorsqu'une entrée à partir d'une pédale d'accélérateur et/ou d'une pédale de frein et/ou d'un système de régulation de vitesse indique une vitesse accrue du véhicule.

10. Procédé selon la revendication 7, 8 ou 9, dans lequel la pompe est commandée de sorte que la force de traction totale sur la deuxième paire de roues soit diminuée pendant un changement de vitesse lorsqu'une entrée à partir d'une pédale d'accélérateur et/ou d'une pédale de frein et/ou d'un système de régulation de vitesse indique une vitesse réduite du véhicule.

11. Chaîne cinématique (1) d'un véhicule, dans laquelle ladite chaîne cinématique (1) comprend au moins un moteur à combustion (E), une transmission classique (T), un embrayage principal (C), un système de transmission hydraulique (hT) pourvu d'au moins une pompe, et une première paire de roues (3) sur un premier essieu (2) et une deuxième paire de roues (5) sur un deuxième essieu (4), **caractérisée en ce que**, ladite chaîne cinématique (1) est commandée selon le procédé de l'une des revendications 1 à 10.

12. Véhicule pourvu d'une chaîne cinématique (1) selon la revendication 11.
